# EUROPEAN PATENT APPLICATION

(11) **EP 2 535 672 A2**
(43) Date of publication of application: **19.12.2012**
(21) Application number: 11170105.8
(22) Date of filing: 16.06.2011
(51) Int. Cl.: F25B 29/00

(54) **Internal air circulation control in a refrigerated transport container**

(71) Applicant: A.P. Møller - Mærsk A/S, 1263 Copenhagen K (DK)
(72) Inventor: Lukasse, Leijn Johannes Sjerp, 6717MS Ede (NL); De Kramer-Cuppen, Janneke Emmy, 6721HK Bennekom (NL)
(74) Representative: Hendriksen, David

(57) **Abstract**

Disclosed is a system for and a method of controlling internal air circulation within a refrigerated transport container (1), the refrigerated transport container (1) comprising a cooling unit (40), and a controi unit, where the cooling unit (40) comprises at least a compressor (6) and an evaporator (16) comprising one or more evaporator fans (10) wherein the method comprises the step of: controlling the operation of the one or more evaporator fans (10) based on one or more predetermined heat load related indicators during periods where the compressor (6) is inactive wherein the one or more evaporator fans (10) are controlled to increase internal air circulation when the one or more predetermined heat load related indicators indicate a heat load increase and wherein the one or more evaporator fans (10) are controlled to decrease internal air circulation when the one or more predetermined heat load related indicators indicate a heat load reduction.

## Description

Disclosed is a method for and system of controlling internal air circulation within a refrigerated transport container.

### BACKGROUND OF THE INVENTION

Temperature in a refrigerated storage space is controlled within a temperature range adjacent to a setpoint temperature. The refrigerated storage space may for example comprise a transport volume of a refrigerated transport container. The setpoint temperature is chosen to keep the perishable produce such as meat, vegetables and fruit, at correct temperatures to avoid quality degradation. It is known in the art to apply temperature control protocols that selectively control operational states of heating units, cooling devices and evaporator fans, coupled to the refrigerated transport container, in order to maintain a setpoint or target air temperature inside the refrigerated transport container.

One typical cooling unit or refrigeration unit used in refrigerated storage transport containers is based on the so-called vapour compression refrigeration cycle. This cycle comprises at least a compressor, a condenser, an expansion device, an evaporator and a capacity regulating device. The compressor sucks refrigerant vapour from the evaporator and compresses the refrigerant vapour which subsequently flows to the condenser at high pressure. The condenser ejects its heat to a medium outside the refrigerated transport container while condensing the refrigerant vapour. The liquefied refrigerant then flows to the expansion device in which a refrigerant pressure drops. The low pressure refrigerant then flows to the evaporator where the refrigerant evaporates while extracting the required heat from the refrigerated transport container.

Other typical cooling units or refrigeration units used in refrigerated transport containers may be different.

Apart from maintaining or controlling the temperature of perishable produce held in refrigerated transport containers tightly or adequately at a desired or setpoint temperature within a certain limit or limits, energy-efficiency is also important.

Evaporator fans are typically dual purpose fans. First of all, evaporator fans are provided to route air in heat transfer relation with an evaporator in order to eject heat from the container's transport volume to the evaporator. On the other hand evaporator fans provide the necessary internal air circulation to homogenize temperatures throughout the container's transport volume. In current practice, the evaporator fans are usually continuously operated at maximum capacity when the unit operates in chilled mode, i.e. when the unit operates with a temperature setpoint above -10°C. Operating the evaporator fans at maximum capacity is an energy-swallowing way to minimize the temperature distribution throughout the container's transport volume. In this operation strategy, evaporator fans are typically responsible for about 30% up to about 60% of the energy consumption of refrigeration units.

The compressor is the other main energy consumer in a typical refrigeration unit. The energy-efficiency especially drops when the capacity regulating device limits the refrigeration capacity to less than its maximum. Therefore it is beneficial to operate the compressor intermittently between off and a large capacity, contrary to continuous operation at limited capacity. Traditionally this is not done in refrigerated containers when operated in chilled mode.

In view of the large energy consumption of refrigerated containers, their growing numbers, the introduction of intermittent compressor operation in chilled mode, and the significant share of evaporator fans in the total energy consumption of refrigeration units there is a need for a more advanced control algorithm adjusting the evaporator fan speed to the need to eject heat at the evaporator and especially to the need for internal air circulation in order to attenuate temperature spread throughout the container's transport volume. Complication is the typical absence of measurements of temperatures in the container's transport volume. Thus it is advantageous to formulate a comprehensive control algorithm for control of evaporator fan speed in refrigerated transport containers with intermittently operated compressors.

Certain evaporator fan systems in relation to transport containers simply operate on an either ON or OFF basis while other evaporator fan systems have more operation states.

In connection with evaporator fan systems having only two states (ON, OFF) and switching between these two states, energy usage is not efficient as the power consumption of a fan system is proportional to the third power of the air flow velocity generated by the fan system. This is due to fan affinity laws (physics) regardless of the fan system.

The fact that power draw of fans correlates to the cube of air flow rate is why an energy-efficient control algorithm for systems with more than two fan operation states should prefer steady operation at for example a state of LOW or HALF speed instead of alternating between an OFF state and a state of HIGH or FULL speed.

According to an aspect, an improved energy saving methodology for controlling the respective operational states of evaporator fans of existing cooling units of refrigerated transport containers is provided. The methodology allows control systems of existing refrigerated transport containers to benefit without any need for hardware replacements or modifications. The improved control methodology may advantageously be implemented as embedded control software executed on a microprocessor of a control system associated with the refrigerated transport container to improve energy efficiency. Consequently, the control methodology may conveniently, but not exclusively, be implemented by a software update of existing embedded control software or program code of the temperature control system.

### SUMMARY

A first aspect relates to a method of controlling internal air circulation within a refrigerated transport container, the refrigerated transport container comprising a transport volume, a cooling unit, and a control unit, where the cooling unit comprises at least a compressor and an evaporator comprising one or more evaporator fans wherein the method comprises the step of: controlling the operation of the one or more evaporator fans based on one or more predetermined heat load related indicators during periods where the compressor is inactive wherein the one or more evaporator fans are controlled to increase internal air circulation when the one or more predetermined heat load related indicators indicate a heat load increase and wherein the one or more evaporator fans are controlled to decrease internal air circulation when the one or more predetermined heat load related indicators indicate a heat load reduction.

Adjusting the internal air circulation according to one or more predetermined heat load related indicators provides energy efficient operation while not or hardly increasing the temperature distribution throughout the container's transport volume.

The one or more predetermined heat load related indicators may e.g. comprise one or more of:
- the supply air flow temperature,
- the return air flow temperature,
- a difference between the supply and the return air flow temperatures,
- differences between previously observed supply and return air flow temperatures,
- difference between a return air flow temperature and one or more previously observed return air flow temperatures,
- difference between a supply air flow temperature and one or more previously observed supply air flow temperatures,
- a duration of a current or previous period of time where the compressor is or was inactive,
- a duration of a current or previous period of time where the compressor is or was active,
- an ambient temperature, and
- functions of one or more of the above.

In one embodiment, the one or more evaporator fans have a given speed setting selected from the group of: a first speed setting with a predetermined first speed and a second speed setting with a predetermined second speed, where the first speed is greater than the second speed, wherein the step of controlling the operation of the one or more evaporator fans during periods where the compressor is inactive comprises:
- controlling the given speed setting of the one or more evaporator fans according to one or more predetermined heat load related criteria, wherein
   o the first speed setting is either maintained or changed to the second speed setting, depending on a first set of one or more predetermined heat load related criteria and the one or more predetermined heat load related indicators, and
   o the second speed setting is either maintained or changed to the first speed setting depending on a second set of one or more predetermined heat load related criteria and the one or more predetermined heat load related indicators.

Operating the evaporator fans at second/LOW speed instead of first/HIGH speed reduces the electric energy consumption of a cooling unit. Would this fan speed reduction be done regardless of heat load then it would carry the risk of increasing temperature distribution throughout the container's transport volume. This risk is minimized by correlating the amount of LOW speed operation to heat load using predetermined heat load related criteria.

In one embodiment, the one or more evaporator fans have a given speed setting selected from the group of: the first speed setting, the second speed setting, and a third speed setting with a predetermined third speed, where the second speed is greater than the third speed, and wherein the step of controlling the operation of the one or more evaporator fans during periods where the compressor is inactive further comprises:
o if hardware limitations or considerations of the one or more evaporator fans require that the third speed setting is used between the second and first speed setting then the third speed setting is used only in a pre-determined maximum period of time.

In one embodiment, the one or more evaporator fans have a given speed setting selected from the group of: a first speed setting with a predetermined first speed, a second speed setting with a predetermined second speed, and a third speed setting with a predetermined third speed, where the first speed is greater than the second speed and the second speed is greater than the third speed, wherein the step of controlling the operation of the one or more evaporator fans during periods where the compressor is inactive comprises:
- controlling the given speed setting of the one or more evaporator fans according to one or more predetermined heat load related criteria,
   wherein
   o the first speed setting is either maintained or changed to the second speed setting depending on a first set of one or more predetermined heat load related criteria and the one or more predetermined heat load related indicators, and
   o the second speed setting is either maintained or changed to the third speed setting or changed to the first speed setting depending on a second set of one or more predetermined heat load related criteria and the one or more predetermined heat load related indicators,
   and the method further comprises the steps of
   o the third speed setting is either maintained or changed to the second speed setting depending on a third set of one or more predetermined heat load related criteria and the one or more predetermined heat load related indicators.

Further energy savings may be achieved by exploiting the possibility of even reducing evaporator fan speed to a third speed setting/OFF during periods of very low heat load. Due to fan affinity laws (physics), the power draw of fans correlates to the cube of air flow rate, so it's a lot more efficient to run LOW speed 100% of the time than 50% OFF and 50% HIGH speed. Therefore the method advantageously avoids transitions from OFF to HIGH and vice versa.

In one embodiment, the step of controlling the operation of the one or more evaporator fans during periods where the compressor is inactive further comprises:
o if hardware limitations require that the first speed setting is used between the third and the second speed setting then the first speed setting is used only in a pre-determined maximum period of time.

In one embodiment, the one or more predetermined heat load related indicators comprise a parameter representing a change in return or supply air temperature and wherein the method further comprises the step of:
- measuring a current return or supply air flow temperature by a return air temperature sensor or supply air temperature sensor, where return or supply air flow is received from or supplied to the refrigerated transport volume to derive the parameter representing a change in return or supply air temperature,
and wherein
- the first set of one or more predetermined heat load related criteria comprises changing the given speed setting from the first speed setting to the second speed setting
   o when a change between current return or supply air flow temperature after a predetermined period of time and a return or supply air flow temperature from the start of the given speed setting is within a predetermined first change range, and
- the second set of one or more predetermined heat load related criteria comprises changing the given speed setting from the second speed setting to the first speed setting
   o when a change between current return or supply air flow temperature and a return or supply air flow temperature from the start of the given speed setting exceeds a predetermined second change range.

When the compressor is OFF, changes in measured return or supply air temperature are good heat load indicators - the more heat is produced inside the container's transport volume or ingresses through the walls, the more rapid the return and supply air temperature change. The sensors to measure these indicators are typically cheap, reliable, and are part of the standard accessories of nearly every cooling unit.

In one embodiment, the one or more predetermined heat load related indicators comprise a parameter representing a change in return or supply air temperature and wherein the method further comprises the step of:
- measuring a current return or supply air flow temperature by a return air temperature sensor or a supply air temperature sensor, where return or supply air flow is received from or supplied to the refrigerated transport volume,
and wherein
- the first set of one or more predetermined heat load related criteria comprises changing the given speed setting from the first speed setting to the second speed setting
   o when a change between current return or supply air flow temperature after a predetermined period of time and return or supply air flow temperature from the start of the given speed setting is within a predetermined first change range threshold,
- the second set of one or more predetermined heat load related criteria comprises changing the given speed setting from the second speed setting to the first speed setting
   o when a change between current return or supply air flow temperature and return or supply air flow temperature from the start of the given speed setting exceeds a predetermined second change range for the given speed setting and a previous fan speed was the first speed, where the previous fan speed is the fan speed of the most recent period, during which the compressor was inactive, that was not the second speed,
- the second set of one or more predetermined heat load related criteria comprises changing the given speed setting from the second speed setting to the third speed setting
   o when a previous speed setting was the third speed setting and after a predetermined period of time since changing to the second speed setting the magnitude of the change or rate of change is within a predetermined third change range, where the change or rate of change is a change or rate of change between return or supply air temperature and return or supply air temperature at the start of a preceding period with the third speed setting, and
- the third set of one or more predetermined criteria comprises changing the given speed setting from the third speed setting to the second speed setting
   o when a change between current return or supply air flow temperature and return or supply air flow temperature from the start of the given speed setting exceeds a predetermined fourth change range for the given speed setting.

This embodiment corresponds to the one above with the exception that the speed of the one or more evaporator fans may operate in three speed settings instead of two.
In one embodiment, a flag represents the most recent evaporator fan speed
- that was not the second speed - during a period in which the compressor was inactive. In that embodiment this flag is reset to the first fan speed when
   - electric power supply to the refrigeration unit starts up, or
   - the compressors starts while the evaporator fan has been running in the second speed for the entire time since the compressor stopped, or
   - the speed setting is the second speed setting and after a predetermined period of time since changing to the second speed setting the magnitude of the change or rate of change is outside a predetermined third change range, where the change or rate of change is a change or rate of change between return or supply air
   temperature and return or supply air temperature at the start of a preceding period with the third speed setting

In one embodiment, a minimum duration period is associated with each of the first, the second, and the third speed setting and no change of a given speed setting is allowed until the minimum duration period for the given speed setting has elapsed.

Minimum durations exclude the possibility of overly frequent evaporator fan speed changes. Too many evaporator fan speed changes would carry the risk of hardware damages, for example by contactor wear.

In one embodiment, the first and the second speed setting is associated with a maximum duration period, and
- the first set of one or more predetermined heat load related criteria comprises changing the given speed setting from the first speed setting to the second speed setting if the given speed setting has lasted more than the maximum duration for the first speed setting,
- the second set of one or more predetermined heat load related criteria comprises changing the given speed setting from the second speed setting to the first speed setting if the given speed setting has lasted more than the maximum duration for the second speed.

The evaporator fan speed increase changes the air flow distribution through the transport volume. If local hot spots have developed inside the transport volume the changed air flow distribution may cause sudden changes in measured return or supply air temperature, otherwise it won't. After increasing the evaporator fan speed, the method may process the change in return air temperature after a predetermined period of time, for example five minutes. In this way, fan speed is reduced again only if the change in return air temperature is small.
In one embodiment, the first, the second, and the third speed setting is associated with a maximum duration period, and
- the first set of one or more predetermined heat load related criteria comprises changing the given speed setting from the first speed setting to the second speed setting if the given speed setting has lasted more than the maximum duration for the first speed setting,
- the second set of one or more predetermined heat load related criteria comprises changing the given speed setting from the second speed setting to the third speed setting if the given speed setting has lasted more than the maximum duration for the second speed setting and a previous fan speed was the first speed, where the previous fan speed is the fan speed of the most recent period, during which the compressor was inactive, that was not the second speed, and
- the third set of one or more predetermined heat load related criteria comprises changing the given speed setting from the third speed setting to the second speed setting if the given speed setting has lasted more than the maximum duration for the third speed setting.

This embodiment corresponds to the one above with the exception that the speed of the one or more evaporator fans may operate in three speed settings instead of two.

In one embodiment, the method comprises the further step of:
- maintaining the speed of the one or more evaporator fans to be at a maximum or the first speed during a period of time where the compressor is inactive if a predetermined heat load related indicator indicates a heat load larger than a predetermined heat load value.

When heat load is large, temperature distribution is large and hence maximal internal air circulation is required to reduce temperature distribution throughout the transport volume. This embodiment helps to set priorities: first reduce temperature distribution to acceptable levels, and only after that has been established start to save energy by reducing internal air circulation.

In one embodiment, the one or more predetermined heat load related indicators comprise a duration of a previous period of time where the compressor was inactive, and the method further comprises the steps of:
- comparing the duration with a predetermined circulation time threshold, and
- maintaining the speed of the one or more evaporator fans at a maximum or the first speed during a current period where the compressor is inactive if the previous period where the compressor was inactive was shorter than the predetermined circulation time threshold.

Usually in cooling units with ON/OFF operated compressors the duration of compressor OFF periods will reduce when heat load increases. Hence if the duration of compressor OFF periods drops below a specified threshold that indicates a heat load exceeding a specified limit value, it is then best to run evaporator fans at maximum speed in order to concentrate on minimizing temperature distribution throughout the transport volume.

In one embodiment, the predetermined heat load related indicator is a function of duration of both a previous period where the compressor was inactive and measured supply and/or return air temperatures during that period.

In this way, an added value is given in situations where the duration of consecutive compressor OFF-periods varies due to unsteady operation of the cooling unit. It provides the possibility to classify a compressor OFF period combined with a large return air temperature change as an indication of a large heat load, while classifying an equally long compressor OFF period combined with a smaller return air temperature change as an indication of smaller heat load.

In one embodiment, the one or more predetermined heat load related indicators comprise the difference between supply and return air temperature, and the method further comprises the steps of:
- maintaining the speed of the one or more evaporator fans at the first speed setting during a period where the compressor is inactive, if an observed difference, or a function of differences observed previously, between supply and return air temperature exceeds a predetermined limit value Δ Tmax.

The time-averaged value of return air temperature minus supply air temperature is another good indicator of heat load: the larger the time-averaged difference, the larger the heat load. Furthermore, this indicator can be exploited to indicate a heat load exceeding a limit value above which all effort should be focused on reducing temperature distribution throughout the transport volume.

In one embodiment, the method further comprises the steps of:
- relating the predetermined limit value ΔTmax to ambient temperature.

In this way, discrimination between heat ingress through the walls and heat production inside the transport volume is provided. Internal heat production is more vicious as temperatures in e.g. palletized fruit may rise multiple degrees Celsius before it has a noticeable effect on measured return air temperature. Relating the predetermined limit value (ΔTmax) to ambient temperature offers the attractive possibility to be more critical on return minus supply air temperature in case the indication is that a larger share of total heat load is internally produced.

In one embodiment, the method further comprises the step of:
- maintaining the speed of the one or more evaporator fans at a maximum or the first speed if a temperature setpoint is in a predetermined temperature setpoint range where very temperature-critical cargoes are known to be carried.

In this way, emphasis on minimizing temperature distribution in the transport volume is provided and gives up the effort to save energy in specific temperature setpoint ranges. This is an attractive way of minimizing the risk of temperature-abuse in specific temperature segments in which extremely temperature-critical and valuable cargoes are frequently carried.

In one embodiment, the method further comprises the step of:
- maintaining the one or more evaporator fans at at least the second predetermined speed setting when a requirement for heating is determined.

In one embodiment, the method further comprises the step of:
- maintaining the one or more evaporator fans at the first predetermined speed setting when an increased requirement for heating is determined.

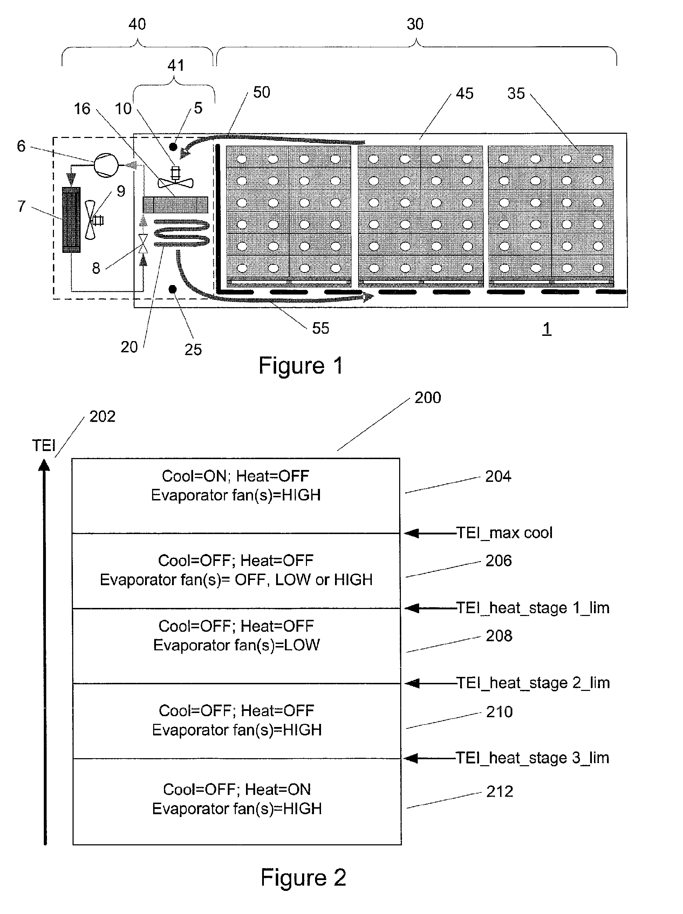

In the two above embodiments, a maximization of the ratio of air flow divided by electric energy input is provided in scenarios where the container's interior needs to be heated instead of cooled. The multiple heating thresholds ensure that in case of decreasing temperatures, first the evaporator fan speed increases step-wise, resulting in a step-wise increase in internal air circulation and heating, and only if this does not suffice, the system will energize the heating unit. Energizing the heating unit only increases heating capacity but does not further increase the internal air circulation. Moreover physics dictate that power draw by a fan is proportional to the cube of its generated air flow. This phenomenon is exploited by using a first heating stage 1 (see control state 208 in Figure 2) with LOW speed evaporator fans and entering a heating stage 2 (see control state 210 in Figure 2) with HIGH speed evaporator fans only when LOW speed does not suffice.

In one embodiment, the refrigerated transport container is not a transport container but another type of refrigerated space in connection with a refrigeration unit. This could for example be an item of refrigerated road transport equipment, a reefer ship, or any type of stationary cold storage.

A second aspect relates to a system for controlling internal air circulation within a refrigerated transport container, the refrigerated transport container comprising a transport volume, a cooling unit, and a control unit, where the cooling unit comprises at least a compressor and an evaporator comprising one or more evaporator fans wherein the system comprises a control system comprising a processing unit adapted to: control the operation of the one or more evaporator fans based on one or more predetermined heat load related indicators during periods where the compressor is inactive wherein the one or more evaporator fans are controlled to increase internal air circulation when the one or more predetermined heat load related indicators indicate a heat load increase and wherein the one or more evaporator fans are controlled to decrease internal air circulation when the one or more predetermined heat load related indicators indicate a heat load reduction.

The embodiments of the system correspond to the embodiments of the method and have the same advantages for the same reasons.

### BRIEF DESCRIPTION OF THE DRAWINGS

A preferred embodiment of the invention will be described in more detail in connection with the appended drawings, in which:
Figure 1 is a simplified side cross-sectional view of a refrigerated transport container,
Figure 2 is a state diagram illustrating respective operational modes of a compressor, a heating unit and one or more evaporator fans as a function temperature error integral TEl,
Figure 3 is a flow chart illustrating steps executed by a microprocessor-impiemented internal air circulation control algorithm or program of a controi system of a refrigerated transport container,
Figure 4 is a flow chart illustrating steps executed by an alternative microprocessor-implemented internal air circulation control algorithm or program of a control system of a refrigerated transport container, and
Figure 5 comprises two graphs illustrating experimentally recorded values of various key variables of the temperature control algorithm under low net heat load conditions in accordance with one embodiment of the presented control methodology.

### DESCRIPTION OF PREFERRED EMBODIMENTS

Figure 1 is a simplified side cross-sectional view of a refrigerated transport container. Figure 1 illustrates one example of a refrigerated transport container 1 wherein the described fan speed control method and/or system may be used. The fan speed control method and/or system may also be used in connection with other refrigerated spaces connected with a refrigeration unit. In the present specification, the term "fan speed" means evaporator fan speed.

Figure 1 illustrates a refrigerated transport container 1 comprising a frontal section having a refrigeration unit or system 40 and a load or cargo section 30. The load or cargo section 30 of the refrigerated transport container 1 comprises a commodity load e.g. comprising a plurality of stackable transport boxes 35 arranged within a transport volume 45 such as to leave appropriate clearance at a ceiling and a floor structure for air flow passages above and beneath the commodity load.

The refrigeration unit 40 in this example uses a so-called vapour compression refrigeration cycle, as has been explained earlier. It comprises a refrigeration circuit and a cooiing space 41. The refrigeration circuit at least comprises a compressor 6, a condenser 7, an expansion device 8 and an evaporator 16. The compressor 6, and the condenser 7 are typically situated outside the insulated enclosure of the transport container 1. Usually the condenser 7 is an air-cooled condenser with one or more condenser fans 9 routing air in heat transfer relation with the condenser in order to eject heat from the condenser to its environment. The cooling space 41 is situated inside the insulated enclosure of the transport container 1. The cooling space 41 is normally separated from the transport volume 45 by a panel equipped with one or more openings to allow a return air flow 50 from the transport volume 45 into the cooling space 41 and a supply air flow 55 out of the cooling space 41 into the transport volume 45. The air flow through the cooling space is maintained by one or more evaporator fans 10. On its way through the cooling space, air successively passes a return air temperature sensor 5, the one or more evaporator fans 10, the evaporator 16, a heating unit 20, and a supply air temperature sensor 25.

The heating unit 20 may e.g. be an electric heater or a reheat air coil. Usually an electric heater is simply an electrical resistor and works on the principle of Joule heating, i.e. an electric current through a resistor converts electrical energy into heat. Usually a reheat air coil is a heat exchanger connected to the refrigeration circuit with controllable valves in such a way that hot pressurized refrigerant, exiting the compressor, can be directed through the heat exchanger when heating is demanded.

The one or more evaporator fans (10) may be configured to operate at a number of discrete preset speed settings and may have a given speed setting selected from the group of: a first speed setting with a predetermined first speed (referred to as HIGH throughout the specification), a second speed setting with a predetermined second speed (referred to as LOW throughout the specification), and a third speed setting with a predetermined third speed (referred to as OFF throughout the specification), where the first speed is greater than the second speed and the second speed is greater than the third speed.

In one embodiment, a predefined speed ratio between the HIGH and LOW speed settings is a ratio of at least about 1.5 and may be 2 or 3 or more.

The OFF, LOW and HIGH speed settings may for example correspond to air flow rates of about 0, about 3000 and about 6000 m³ per hour, respectively, but may depend on the specific refrigerated transport container and/or refrigeration unit or system used.

Throughout the present specification, each of the discussed fan speed settings of the evaporator fan or fans may be provided by joined operation of all or some of the evaporator fans present in the refrigerated transport container. Different fan speed settings may be achieved by changing the actual speed of one or several individual evaporator fan(s) or by turning a certain number of fans ON or OFF.

A control system (not illustrated) comprises a programmed microprocessor which controls respective operational states of the variable speed evaporator fans 10, the heating unit 20, and the compressor 6 in accordance with a control algorithm defined by a set of microprocessor program instructions. The control system may additionally comprise a user interface, for example a LCD display, where an operator or ship technician can enter or modify certain parameter values of the control algorithm such as a setpoint temperature of the refrigerated transport container 1, etc.

The operation of the control algorithm is explained in detail below with reference to Figures 2-5.

Figure 2 is a state diagram illustrating respective operational modes of a compressor (cooling), a heating unit and one or more evaporator fans that can have a speed setting OFF, LOW or HIGH. Control is related to a temperature error integral TEl, TEl being the integral over supply air temperature minus temperature setpoint. TEl is just one possible temperature-related signal on which control of cooling and heating could be based.

A state diagram 200 of Figure 2 schematically illustrates how switching between control modes or states of cooling, heating, and/or air circulation within a refrigerated transport container is performed as a function of TEl.

Arrow 202 points in direction of increasing values of TEl. The state or domain diagram 200 comprises a number of TEl thresholds or limits in-between individual control states 204, 206, 208, 210 and 212. A first threshold, TEl_heat_stage_3_lim, constitutes a lower threshold below which (control state 212) the heating unit is switched ON, the one or more evaporator fans run in HIGH speed and the cooling unit is (maintained) in an OFF.

In the upper portion of the state diagram 200 in-between control states 204 and 206, an additional threshold, TEl_max_cool, constitutes an upper threshold above which the compressor is switched ON and the one or more evaporator fans run in HIGH speed while the heating unit is (maintained) in an OFF state.

Three intermediate states 206, 208, 210, where the operational states of both the cooling unit and the heating unit are OFF, are located in abutment in-between the upper control state 204 (cooling) and the lowermost control state 212 (heating via the heating unit). These three intermediate states comprise two heating states, control states 208 and 210, and a circulation state 206. In the present specification, the term "circulation state" means time periods spent in control state 206.

In the control states 208 and 210, the heating unit resides in operational state OFF and the one or more evaporator fans are exploited to both supply heat to the supply air and add circulation to the air inside the transport volume.

In the control state 208 the one or more evaporator fans are set in the LOW speed operational state while the speed of the one or more evaporator fans is set to HIGH speed in the control state 210 reflecting a requirement for higher heat production due to the decreasing value of TEl as indicated by the arrow 202.

In the circulation control state 206 the speed of the one or more evaporator fans is switched between HIGH, LOW and OFF according to the control algorithm for internal air circulation using one or more heat-load related indicators as input. The main scope of the control algorithm is the operation of evaporator fan speed in this state.

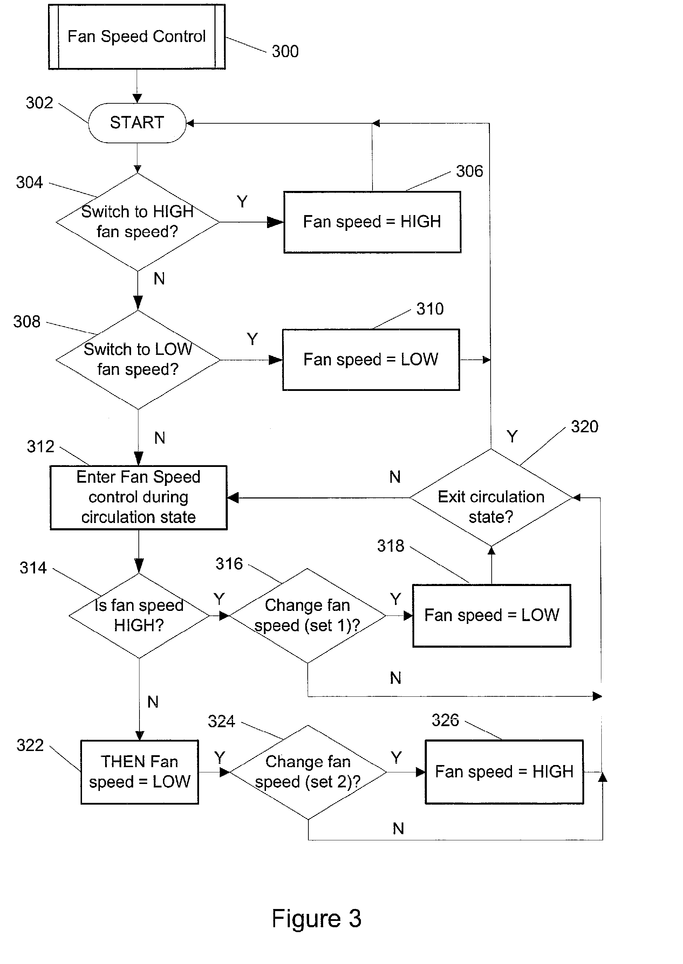

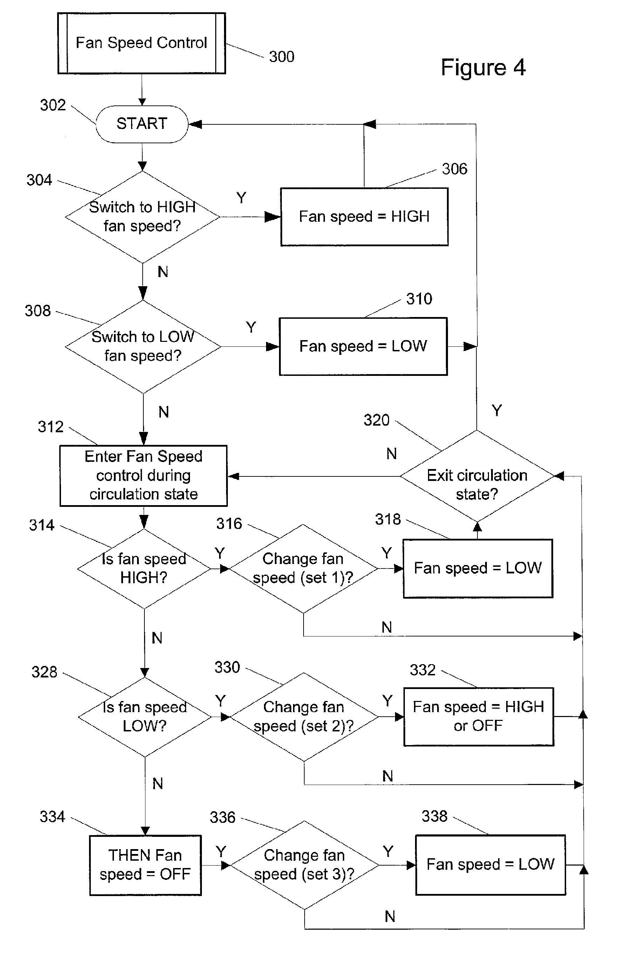

Please note, the circulation state 206 shown in Figure 2 illustrates control between three possible speeds of the one or more evaporator fans, as will be explained further in connection with Figure 4. Other embodiments may switch between HIGH and LOW as will be explained further in connection with Figure 3.

Figure 2 shows three heating thresholds TEl_heat_stage1_lim, TEl_heat_stage2_lim, and TEl_heat_stage3_lim. One advantage of using multiple heating thresholds is a maximization of the ratio of air flow divided by electric energy input because the multiple heating thresholds ensure that in case of decreasing temperatures, first the evaporator fan speed increases, resulting in increased internal air circulation and some heating, and only if this does not suffice, the system will enter control state 212. In control state 212, apart from running the evaporator fans at maximum speed, the heating unit is energized. Energizing the heating unit only increases heating capacity but does not further increase the internal air circulation. Moreover physics dictate that power draw by a fan is proportional to the cube of its generated air flow. This phenomenon is exploited by using a heating stage 1 (control state 208) with LOW speed evaporator fans and entering a heating stage 2 (control state 210) with HIGH speed evaporator fans only when LOW speed does not suffice.

As one example, the setting thresholds between the individual states 204, 206, 208, 210 and 212 may be:
TEl_max_cool = 90 °C*min,
TEl_heat_stage_1_lim = 0 °C*min,
TEl_heat_stage_2_lim = -10 °C*min,
TEl_heat_stage_3_lim = -30 °C*min.

Figure 3 is a flow chart illustrating steps executed by a microprocessor-implemented internal air circulation control algorithm or program of a control system of a refrigerated transport container.

The flowchart shown in Figure 3 provides one example of the operation of an internal air circulation or fan speed control algorithm 300 based on one or more predetermined heat load related indicators.

The one or more predetermined heat load related indicators may e.g. comprise one or more of:
- the supply air flow temperature (e.g. as obtainable via sensor 25 in Figure 1),
- the return air flow temperature (e.g. as obtainable via sensor 5 in Figure 1),
- a difference between the supply and the return air flow temperatures,
- differences between previously observed supply and return air flow temperatures,
- difference between a return air flow temperature and one or more previously observed return air flow temperatures,
- difference between a supply air flow temperature and one or more previously observed supply air flow temperatures,
- a duration of a current or previous period of time where the compressor is or was inactive,
- a duration of a current or previous period of time where the compressor is or was active,
- an ambient temperature, and
- functions of one or more of the above.

In the embodiment of Figure 3, control is made between only the HIGH and LOW speed although it is to be understood that certain overriding or overall conditions may exist to change the speed settings differently, e.g. to go into HIGH given some overruling conditions outside the scope of the fan speed control method and/or system or into OFF to shut the one or more evaporator fans off in case of a shut down alarm, etc.

The algorithm starts in step 302 and proceeds to step 304 where it is tested whether the fan speed of the one or more evaporator fans is to be maintained at or switched to HIGH speed according to predetermined criteria.

The criteria for maintaining fan speed at HIGH or switching the fan speed to HIGH e.g. comprises one or more of:
- when in start-up of the temperature control algorithm,
- cooling is ON (i.e. being in state 204 of Figure 2);
- heating is required using the heating unit (i.e. being in state 212 of Figure 2);
- heating is required using the evaporator fans but not enough to require heating using the heating unit but more heat is required than using the evaporator fans in LOW speed (i.e. being in state 210 of Figure 2);
- if the duration of the last circulation state, a predetermined heat load related indicator, was relatively short or less than a predetermined circulation time threshold t_{ct}; and
- if a difference or a function of differences between supply and return air temperature (e.g. as obtained by sensors 25 and 5 in Figure 1), a predetermined heat load related indicator, exceeds a predetermined limit value (ΔTmax). ΔTmax may be related to ambient temperature in order to discriminate between external heat ingressing into the refrigerated transport container and heat generated inside the refrigerated transport container (signifying an increased risk of hot spot(s) formation in the container transport volume).

It is to be understood that other criteria for maintaining the fan speed at HIGH or switching to HIGH may be contemplated.

Two of the criteria in the preceding list are predetermined heat load related criteria using predetermined heat load related indicators to set fan speed at HIGH when heat load is high and there may consequentially be a quite uneven temperature distribution throughout the container transport volume (45 in Figure 1). These two criteria are:
- if the duration of the last circulation state was relatively short or less than a predetermined period of time.
- if a difference or a function of differences between supply and return air temperature (e.g. as obtained by sensors 25 and 5 in Figure 1) exceeds a predetermined limit value (ΔTmax).
Setting the fan speed to HIGH according to these criteria helps to ensure that proper temperature control always prevails over energy saving purposes.

If the fan speed is to be maintained at or switched to HIGH speed according to these predetermined criteria, i.e. the test of step 304 is yes, true, etc., the algorithm proceeds to step 306 and either maintains the fan speed at or sets it to HIGH speed. After the speed has been set to or maintained at HIGH, the algorithm continues back to the start step 302.

If this is not the case, i.e. the fan speed was not to be maintained at or switched to HIGH speed according to these predetermined criteria, then the algorithm proceeds to step 308 where it is tested whether the fan speed of the one or more evaporator fans is to be maintained at or switched to LOW speed according to predetermined criteria.

The criteria for maintaining fan speed at LOW or switching the fan speed to LOW e.g. comprises:
- heating is required using the evaporator fans but not enough to require heating using the heating unit and also not enough to require heat from using the evaporator fans in HIGH speed (i.e. being in state 208 of Figure 2).

It is to be understood that other criteria for maintaining the fan speed at LOW or switching to LOW may be contemplated.

If the fan speed is to be maintained at or switched to LOW speed according these predetermined criteria, i.e. the test of step 308 is yes, true, etc., the algorithm proceeds to step 310 and either maintains the fan speed at or sets it to LOW speed. After the speed has been set to or maintained at LOW, the algorithm proceeds back to the start step 302.

If this is not the case, i.e. the fan speed was not to be maintained at or switched to LOW speed according to these predetermined criteria, then the algorithm proceeds to step 312 and enters fan speed control during a circulation state (i.e. state 206 of Figure 2). In control state 206 of Figure 2 the flow chart of Figure 3 controls the one or more evaporator fans to increase internal air circulation when one or more predetermined heat load related indicators indicate a heat load increase and to decrease internal air circulation when the one or more predetermined heat load related indicators indicate a heat load reduction. When step 312 is entered from step 308 (as opposed to from the later step 320) the fan speed may be set to LOW, i.e. the fan speed is set to LOW when entering the circulation state.

In the segment of the algorithm concerning the evaporator fan speed control during the circulation state, fan speed is controlled according to a first and a second set of one or more predetermined heat load related criteria and the one or more predetermined heat load related indicators.

The first set of one or more predetermined heat load related criteria governs evaporator fan speed control when a speed setting of the one or more evaporator fans is HIGH. In this embodiment, the fan speed setting HIGH may only be maintained or switched to LOW.

The second set of one or more predetermined heat load related criteria governs evaporator fan speed control when a speed setting of the one or more evaporator fans is LOW. In this embodiment, the fan speed setting LOW may only be maintained or switched to HIGH.

In step 314 it is tested whether the current fan speed is HIGH. If yes, then the algorithm proceeds to step 316 where it is tested whether the fan speed should be changed or not according to the first set of one or more predetermined heat load related criteria.

If yes, the method proceed to step 318 where the fan speed is changed to LOW after which the method proceeds to step 320 to test whether the circulation state 206 in Figure 2 is exited or not. If the test in step 320 is yes, then the algorithm continues back to the start step 302 and if no, the algorithm proceeds to step 312 and remains in the fan speed control during the circulation state.

If the test in step 314 results in no (i.e. the current fan speed is not HIGH) then the method proceeds to step 322 and in the current embodiment (regulating only between HIGH and LOW during the circulation state) the current fan speed must be LOW. The method proceeds to step 324 where it is tested whether the current the fan speed should be changed or not according to the second set of one or more predetermined heat load related criteria. If not, the method proceeds to step 320 and if yes, the method proceeds to step 326 where the fan speed is changed to HIGH after which the method proceeds to step 320.

In one embodiment, step 316 (or a preceding step) measures a current return air flow temperature (Tret_t) by a return air temperature sensor (see e.g. 5 in Figure 1), and derives a parameter representing a change in return air temperature since the start of the given speed setting, i.e. the difference between current return air flow temperature and return air flow temperature value at the moment when the speed was changed to HIGH (Tret_0).

The first set of one or more predetermined heat load related criteria (governing maintaining the fan speed in HIGH or changing it to LOW) then governs a switch to LOW speed when the change of return air temperature after a predetermined period of time (Tret_5), like 5 minutes or so, is within a predetermined first change range (ΔTret5_rate_HIGH). This ensures that the development or change of the temperature being monitored is within certain limits so it is temperature-wise safe and energy-wise beneficial to switch to a lower fan speed.

Otherwise the fan speed is maintained at HIGH.

In addition, the first set may comprise a criterion for switching to LOW speed, regardless of any value of the one or more predetermined heat load related indicators, if the fan speed has been HIGH for longer than a predetermined period of time (tmax_HIGH). This predetermined period of time may e.g. be 20 minutes but can depend on the given system.

Accordingly, step 324 (or a preceding step) measures a current return air flow temperature (Tret_t) and derives a parameter representing a change in return air temperature since the start of the given speed setting, i.e. the difference between current return air flow temperature and return air flow temperature value at the moment when the speed was changed to LOW (Tret_0).

The second set of one or more predetermined heat load related criteria (governing maintaining the fan speed in LOW or changing it to HIGH) then governs a switch to HIGH speed when the change of return air temperature, exceeds a predetermined second change range (being different than the first change range mentioned above for the first set).

Otherwise the fan speed is maintained at LOW.

In addition, the second set may comprise a criterion for switching to HIGH speed, regardless of any value of the one or more predetermined heat load related indicators, if the fan speed has been LOW for longer than a predetermined period of time (tmax_LOW). This predetermined period of time may e.g. be 40 minutes but can depend on the given system. Such a maximum duration period for running at LOW speed ensures that after at most tmax_LOW minutes the algorithm re-enters step 316 where it is then checked if temperature-wise it is still safe to call upon the energy-wise beneficial lower fan speed. The maximum period of time for the LOW speed setting may be different than the maximum period of time for the HIGH speed setting.

In alternative embodiments, the return air flow temperature and change thereof may be substituted with the supply air flow temperature and change thereof. Supply air flow temperature can be obtained by a supply air temperature sensor (see e.g. 25 in Figure 1) measuring the temperature in the supply air flow (see e.g. 55 in Figure 1) that is supplied to the refrigerated transport volume (see e.g. 45 in Figure 1),

As yet another alternative, both the return and the supply air flow temperature and changes or functions thereof may be used.

In one embodiment, if hardware limitations or considerations of the one or more evaporator fans (10) require that the third speed setting (OFF) is used between the second (LOW) and first speed setting (HIGH), i.e. before step 306, 310, 318 or 326, then the third speed setting (OFF) is used only in a pre-determined maximum period of time that preferably is relatively short, e.g. only 30 seconds or less.

Furthermore, a restriction may also be imposed prohibiting switching of fan speed, i.e. there is a minimum period of time that a speed setting has to be active before it can be changed. This avoids hardware damages, for example by contactor wear. Such a minimum period of time may e.g. be about 5 minutes but can depend on the specific system. The minimum period of time may be the same for each speed setting (i.e. LOW, HIGH) or it can be different.

Typically, fan control would be in steps 302 and 304 in the beginning of a shipment when the temperature of the cargo is getting to setpoint temperature. After this is achieved or when it is close to being achieved, fan control would typically be in steps 312 till 326.

This control of the fan speed, and thereby of the internal air circulation within a refrigerated transport container in relation to one or more predetermined heat load related indicators provides an energy efficient use of the evaporator fans while taking into account the possible temperature distribution throughout the transport volume (45 in Figure 1).

Figure 4 is a flow chart illustrating steps executed by an alternative microprocessor-implemented internal air circulation control algorithm or program of a control system of a refrigerated transport container.

This flow chart corresponds in large part to the flow chart shown and explained in connection with Figure 3 with the differences as explained in the following.

The differences are to the fan speed control in the circulation state and result from the use of three possible speed settings (OFF, LOW, HIGH) instead of two possible speed settings (LOW, HIGH) as in Figure 3 of the fan speed during this control or regulation.

Therefore for Figure 4 comments and the steps up to and included step 320 are the same as in Figure 3.

In addition to using a first and a second set of one or more heat load related criteria for governing fan speed control when fan speed is HIGH or LOW, a third set of predetermined heat load related criteria is used to control fan speed when a speed setting of the one or more evaporator fans is OFF.

Furthermore, the second set of one or more predetermined heat load related criteria in this embodiment differs from the second set in Figure 3, as it now governs that the fan speed setting LOW may be maintained or may be switched to either HIGH or OFF.

Figure 4 will be explained starting at step 328 proceeding to step 338, i.e. the current fan speed was not HIGH in the test of step 314.

In step 328 it is checked whether the fan speed is LOW - as opposed to step 322 in Figure 3 where LOW was the only available speed.

If the check is that the current fan speed is LOW then the method proceeds to step 330 where it is tested whether the fan speed should be changed and if so, whether the fan speed should be changed to HIGH or OFF depending on the second set of one or more predetermined heat load related criteria, as will be explained later. If the fan speed should be changed, step 332 sets the fan speed to either HIGH or OFF depending on the second set and the method proceeds to step 320.

If the check in step 328 is that the fan speed is not LOW, the method proceeds to step 334 and in the current embodiment (regulating between [0115] OFF, LOW, and HIGH during the circulation state) the current fan speed must be OFF.

The method proceeds to step 336 where it is tested whether the current OFF fan speed should be changed or not according to the third set of one or more predetermined heat load related criteria.

If not, the method proceeds to step 320 and if yes, the method proceeds to step 338 where the fan speed is changed to LOW after which the method proceeds to step 320.

In one embodiment, step 336 (or a preceding step) measures a current return air flow temperature (Tret_t) by a return air temperature sensor (see e.g. 5 in Figure 1), and derives a parameter representing a change in return air temperature since the start of the given speed setting, i.e. the difference between current return air flow temperature and return air flow temperature value at the moment when the speed was changed to OFF (Tret_0).

The third set of one or more predetermined heat load related criteria then governs a switch from OFF to LOW speed when the change of return air temperature, exceeds a predetermined third change range (being different than the first and second change range mentioned in connection with Figure 3).

Otherwise the fan speed is maintained at OFF.

In addition, the third set may comprise a criterion for switching to LOW speed, regardless of any value of the one or more predetermined heat load related indicators, if the fan speed has been OFF for longer than a predetermined period of time (tmax_OFF). This predetermined period of time may e.g. be 15 minutes but can depend on the given system. Such a maximum duration period for running at OFF speed ensures that after at most tmax_OFF minutes the algorithm re-enters step 330 where it is then checked if temperature-wise it is still safe to call upon the energy-wise beneficial lower fan speed.

As mentioned, in step 330 the second set of one or more predetermined heat load related criteria governs switching from LOW to OFF speed in addition to the switching to HIGH speed as explained in connection with Figure 3.

In addition to what was described in connection with Figure 3, in step 330 the second set of one or more predetermined heat load related criteria now in relation to switching from LOW to HIGH speed comprises:
switching to HIGH speed when two conditions are satisfied: condition 1) the change of return air temperature (derived as explained in connection with Figure 3), exceeds a predetermined second change range (being different than the first and third change range) - this is identical as in Figure 3 -, and condition 2) a previous fan speed was the first speed (HIGH). Here the previous fan speed is defined as the fan speed of the most recent period, during which the compressor (6) was inactive, that was not the second speed (LOW).

Furthermore, the second set of one or more predetermined heat load related criteria in step 330 also governs a switch from LOW to OFF when either of the following two conditions is met: condition 1) if the fan speed has been at LOW speed for more than a predetermined period of time, e.g. 40 minutes, while previous fan speed is HIGH, or condition 2) a previous speed setting was the third speed setting (OFF) and after a predetermined period of time (Tret_5) since changing to the second speed setting (LOW) the magnitude of the change or rate of change is within a predetermined third change range (ΔTret5_rate_LOW), where the change or rate of change is a change or rate of change between return air temperature (Tret_t) and return air temperature (Tret_0) at the start of a preceding period with the third speed setting (OFF).

Otherwise the fan speed is maintained at LOW.

The use of three, instead of two, operational states of the fan speed, gives the possibility of increased energy efficiency in the use of the evaporator fans while the control algorithm avoids a possible rise in temperature distribution throughout the transport volume (45 in Figure 1). In addition, the described rules ensure that the speed setting of the one or more evaporator fans always is done one step at a time, so never from OFF to HIGH or vice versa.

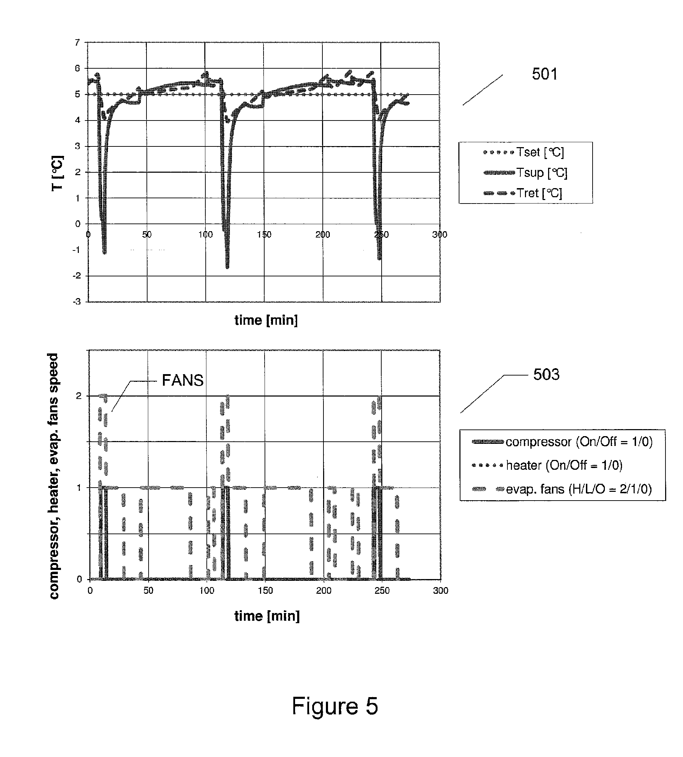

Shown in Figure 5 are two graphs 501 and 503 illustrating experimentally recorded values of selected variables of the above-described fan speed control algorithm under low net heat load conditions of the refrigerated transport container, i.e. the one or more predetermined heat load related indicators indicate a relatively low heat load.

Graph 501 shows temperature values in °C on the y-axis for the setpoint temperature Tset (dotted line), the return air temperature Tret (dashed line) and the supply air temperature Tsup (full line). The x-axis unit is time in minutes.

Graph 503 shows corresponding (to graph 501) operating states of the compressor (full line), heating unit (dotted line at value "0") and evaporator fans (dashed line) where the states are indicated on the y-axis. The respective ON states of the compressor and heating unit are indicated by the value "1" and OFF states as the value "0". For the evaporator fans, the HIGH speed setting or state (maximum fan speed) is indicated as "2", the LOW setting as "1" and the OFF setting as "0".

As illustrated, the supply air temperature in graph 501 varies considerably between about 5.5 °C and about - 1.75 °C while the return air temperature varies considerably less between about between 5.75 °C and 4.1 °C. The lower variability of the return air temperature is caused by thermal inertia of the produce in the transport volume (see e.g. 45 in Figure 1).

The activation of the compressor in graph 503 also shows that the operational state of evaporator fans is HIGH (state "2") when the active cooling starts. The heating unit remains OFF, indicating that there is no need to heat.

After the initial speed of the fans being HIGH (when the compressor is ON), the evaporator fan speed starts cycling between LOW and OFF according to the earlier described rules for controlling the fan speed in the circulation state (i.e. steps 312 till 320, and 328 till 338 in Figure 4) thereby saving energy and controlling the internal air circulation via controlling the fan speed in accordance with the predetermined heat load related indicators 'changes and rate of changes in return air temperature Tret'.

## Claims

1. A method of controlling internal air circulation within a refrigerated transport container (1), the refrigerated transport container (1) comprising a transport volume (45), a cooling unit (40), and a control unit, where the cooling unit (40) comprises at least a compressor (6) and an evaporator (16) comprising one or more evaporator fans (10) wherein the method comprises the step of:
- controlling the operation of the one or more evaporator fans (10) based on one or more predetermined heat load related indicators during periods where the compressor (6) is inactive wherein the one or more evaporator fans (10) are controlled to increase internal air circulation when the one or more predetermined heat load related indicators indicate a heat load increase and wherein the one or more evaporator fans (10) are controlled to decrease internal air circulation when the one or more predetermined heat load related indicators indicate a heat load reduction.

2. The method according to claim 1, wherein the one or more evaporator fans (10) have a given speed setting selected from the group of: a first speed setting (HIGH) with a predetermined first speed and a second speed setting (LOW) with a predetermined second speed, where the first speed is greater than the second speed, wherein the step of controlling the operation of the one or more evaporator fans (10) during periods where the compressor (6) is inactive comprises:
- controlling the given speed setting of the one or more evaporator fans (10) according to one or more predetermined heat load related criteria, wherein
o the first speed setting (HIGH) is either maintained or changed to the second speed setting (LOW), depending on a first set of one or more predetermined heat load related criteria and the one or more predetermined heat load related indicators, and
o the second speed setting (LOW) is either maintained or changed to the first speed setting (HIGH) depending on a second set of one or more predetermined heat load related criteria and the one or more predetermined heat load related indicators.

3. The method according to any one of claims 1-2, wherein the one or more predetermined heat load related indicators comprise a parameter representing a change in return (50) or supply air (55) temperature and wherein the method further comprises the step of:
- measuring a current return or supply air flow temperature (Tret_t) by a return air temperature sensor (5) or supply air temperature sensor (25), where return or supply air flow (50, 55) is received from or supplied to the refrigerated transport volume (45) to derive the parameter representing a change in return or supply air temperature,
and wherein
- the first set of one or more predetermined heat load related criteria comprises changing the given speed setting from the first speed setting (HIGH) to the second speed setting (LOW)
o when a change between current return or supply air flow temperature after a predetermined period of time (Tret_5) and a return or supply air flow temperature from the start of the given speed setting (Tret_0) is within a predetermined first change range (ΔTret5_rate_HIGH), and
- the second set of one or more predetermined heat load related criteria comprises changing the given speed setting from the second speed setting (LOW) to the first speed setting (HIGH)
o when a change between current return or supply air flow temperature (Tret_t) and a return or supply air flow temperature from the start of the given speed setting (Tret_0) exceeds a predetermined second change range.

4. The method according to any one of claims 1-3, wherein the one or more predetermined heat load related indicators comprise a duration of a previous period of time where the compressor (6) was inactive, and wherein the method further comprises the steps of:
- comparing the duration with a predetermined circulation time threshold t_{ct}, and
- maintaining the speed of the one or more evaporator fans (10) at a maximum or the first (HIGH) speed during a current period where the compressor (6) is inactive if the previous period where the compressor (6) was inactive was shorter than the predetermined circulation time threshold t_{ct}.

5. The method according to any one of claims 1-4, wherein the one or more predetermined heat load related indicators comprise the difference between supply and return air temperature, and wherein the method further comprises the steps of:
- maintaining the speed of the one or more evaporator fans (10) at the first speed setting (HIGH) during a period where the compressor (6) is inactive, if an observed difference, or a function of differences observed previously, between supply and return air temperature exceeds a predetermined limit value (ΔTmax).

6. The method according to any one of claims 2-5, wherein the method further comprises:
- maintaining the one or more evaporator fans (10) at at least the second predetermined speed setting (LOW) when a requirement for heating is determined, and
- maintaining the one or more evaporator fans (10) at the first predetermined speed setting (HIGH) when an increased requirement for heating is determined.

7. A method according to any one of the preceding claims, wherein the refrigerated transport container (1) is not a transport container but another type of refrigerated space in connection with a refrigeration unit.

8. A system for controlling internal air circulation within a refrigerated transport container (1), the refrigerated transport container (1) comprising a transport volume (45), a cooling unit (40), and a control unit, where the cooling unit (40) comprises at least a compressor (6) and an evaporator (16) comprising one or more evaporator fans (10) wherein the system comprises a control system comprising a processing unit adapted to:
- control the operation of the one or more evaporator fans (10) based on one or more predetermined heat load related indicators during periods where the compressor (6) is inactive wherein the one or more evaporator fans (10) are controlled to increase internal air circulation when the one or more predetermined heat load related indicators indicate a heat load increase and wherein the one or more evaporator fans (10) are controlled to decrease internal air circulation when the one or more predetermined heat load related indicators indicate a heat load reduction.

9. The system according to claim 8, wherein the one or more evaporator fans (10) have a given speed setting selected from the group of: a first speed setting (HIGH) with a predetermined first speed and a second speed setting (LOW) with a predetermined second speed, where the first speed is greater than the second speed, wherein the processing unit is adapted to control the operation of the one or more evaporator fans (10) during periods where the compressor (6) is inactive by:
- controlling the given speed setting of the one or more evaporator fans (10) according to one or more predetermined heat load related criteria, wherein
o the first speed setting (HIGH) is either maintained or changed to the second speed setting (LOW), depending on a first set of one or more predetermined heat load related criteria and the one or more predetermined heat load related indicators, and
o the second speed setting (LOW) is either maintained or changed to the first speed setting (HIGH) depending on a second set of one or more predetermined heat load related criteria and the one or more predetermined heat load related indicators.

10. The system according to any one of claims 8-9, wherein the one or more predetermined heat load related indicators comprise a parameter representing a change in return (50) or supply air (55) temperature and wherein the processing unit is adapted to:
- measure a current return or supply air flow temperature (Tret_t) by a return air temperature sensor (5) or supply air temperature sensor (25), where return or supply air flow (50, 55) is received from or supplied to the refrigerated transport volume (45) to derive the parameter representing a change in return or supply air temperature, and wherein
- the first set of one or more predetermined heat load related criteria comprises changing the given speed setting from the first speed setting (HIGH) to the second speed setting (LOW)
o when a change between current return or supply air flow temperature after a predetermined period of time (Tret_5) and a return or supply air flow temperature from the start of the given speed setting (Tret_0) is within a predetermined first change range (ΔTret5_rate_HIGH), and
- the second set of one or more predetermined heat load related criteria comprises changing the given speed setting from the second speed setting (LOW) to the first speed setting (HIGH)
o when a change between current return or supply air flow temperature (Tret_t) and a return or supply air flow temperature from the start of the given speed setting (Tret_0) exceeds a predetermined second change range.

11. The system according to any one of claims 8-10, wherein the one or more predetermined heat load related indicators comprise a duration of a previous period of time where the compressor (6) was inactive, and wherein the processing unit is adapted to:
- compare the duration with a predetermined circulation time threshold t_{ct}, and
- maintain the speed of the one or more evaporator fans (10) at a maximum or the first (HIGH) speed during a current period where the compressor (6) is inactive if the previous period where the compressor (6) was inactive was shorter than the predetermined circulation time threshold t_{ct}.

12. The system according to any one of claims 8-11, wherein the one or more predetermined heat load related indicators comprise the difference between supply and return air temperature, and wherein the processing unit is adapted to:
- maintain the speed of the one or more evaporator fans (10) at the first speed setting (HIGH) during a period where the compressor (6) is inactive, if an observed difference, or a function of differences observed previously, between supply and return air temperature exceeds a predetermined limit value (ΔTmax).

13. The system according to any one of claims 9-12, wherein the processing unit is adapted to:
- maintain the one or more evaporator fans (10) at at least the second predetermined speed setting (LOW) when a requirement for heating is determined and to
- maintain the one or more evaporator fans (10) at the first predetermined speed setting (HIGH) when an increased requirement for heating is determined.

14. A system according to any one of claims 8-13, wherein the refrigerated transport container (1) is not a transport container but another type of refrigerated space in connection with a refrigeration unit.
